# EUROPÄISCHE PATENTSCHRIFT

(11) **EP 0 445 389 B1**
(45) Veröffentlichungstag und Bekanntmachung des Hinweises auf die Patenterteilung: **25.01.1995**
(21) Anmeldenummer: 90123542.4
(22) Anmeldetag: 07.12.1990
(51) Int. Cl.: C22C 26/00

(54) **Kobaltgebundene Diamantwerkzeuge, Verfahren zu ihrer Herstellung sowie deren Verwendung**
Cobalt bonded diamond tools, process for preparing the same and their use
Outils de diamant liés avec du cobalt, leur procédé de préparation et leur usage

(30) Priorität: 07.03.1990 DE 4007057
(43) Veröffentlichungstag der Anmeldung: 11.09.1991
(73) Patentinhaber: H.C. Starck GmbH & Co. KG, 38642 Goslar (DE)
(72) Erfinder: Krismer, Bruno E., Dr., W-3380 Goslar 1 (DE); Nietfeld, Georg, Dr., W-3388 Bad Harzburg 1 (DE)
(74) Vertreter: Steiling, Lothar, Dr.

(56) Entgegenhaltungen:
- DE-A- 2 802 999
- GB-A- 2 024 260
- US-A- 3 515 524

## Beschreibung

Die vorliegende Erfindung betrifft borhaltige kobaltgebundene Diamantschneidwerkzeuge, Verfahren zu ihrer Herstellung sowie deren Verwendung.

Kobaltgebundene Diamant-Schneidwerkzeuge, wie z.B. Gatter- und Seilsägen oder Bohrkronen für Gestein, bestehen aus verpreßten und gesinterten Gemischen aus Diamantpulver und Kobaltmetall-Matrixpulver. Dabei muß das Kobaltmetall bezüglich der Harte und Duktilität dem jeweiligen Einsatzgebiet angepaßt sein.

Beim Bohren oder Schneiden von Gestein mit Diamantwerkzeugen muß hinter den Diamantkörnern eine Auskolkung entstehen, damit der entstehende Gesteinsstaub mit der Kühlflüssigkeit ausgewaschen und abtransportiert werden kann.

Ist das Matrixmettall zu weich, wird durch die abrasive Wirkung des Gesteinsstaubs die Auskolkung zu tief und die Diamanten fallen vorzeitig aus dem Bindemetall heraus. Sie gehen damit für den Schneidprozeß verloren. Ist das Bindemetall zu hart, dann wird die Auskolkung zu klein oder unterbleibt gänzlich. Dadurch kann der Gesteinsstaub nicht abgeführt werden und die Schneidleistung geht rapide zurück. Entsprechend harte Schleifkörper mit in ein Matrixmetall aus mit Bor vorlegiertem Kobaltpulver eingebetteten Diamantteilchen gehen aus der DE-A 2 802 999 hervor. Diese Schleifkörper weisen neben Kobaltborid auch Borkarbid auf. Für hochwertige Gesteinssägen und/oder -bohrer muß das Matrixmetall, in das die Diamanten eingebetet sind, der Härte des Gesteins genau angepaßt werden. Insbesondere Betreiber großer Marmorbrüche verlangen vom Hersteller der Werkzeuge für ihr Gestein maßgeschneiderte Sägen oder Teile für Seilsägen.

Technisch reines Kobaltmetallpulver weist als Matrixmetall in Sinterteilen nach dem Heißpressen bei 930°C bis 980°C Brinellhärten von ca. 200 HB₃₀ auf. Diese Härte ist dabei abhängig von der Pulvermorphologie und von der Art und Menge der als Verunreinigungen vorliegenden Elemente. Auch der Sauerstoffgehalt des Kobaltmetallpulvers spielt dabei eine Rolle.

Verschiedene Dotierungsmittel sind als Härter für Sinterkörper mit Kobalt als Matrixmetall bekannt: Metalle, Silizide und Karbide der 4b-, 5b- und 6b-Gruppe des Periodensystems. Eine bevorzugte Rolle spielt dabei das Element Bor, dessen Wirkung als Härter für diverse Metalle, insbesondere auch für die Metalle der Eisengruppe bekannt ist. Dabei hat das sogenannte "Nibodur''-Verfahren der BAYER AG besondere Bedeutung gewonnen: Es dient zur Beschichtung von Werkstoffen mit Nickel oder Kobalt. Die stromlose chemische Abscheidung der borhaltigen Metalle, vorzugsweise Nickel, dient bei diesem Verfahren der Oberflächenbeschichtung und -härtung von Werkstoffen.

Bei der Herstellung kobaltgebundener Diamantwerkzeuge, die daneben noch karbidische Hartstoffe enthalten, wird nach der JP-A 57/38377 unter anderem auch kobaltbeschichtetes Diamantpulver eingesetzt.

Durch die Beschichtung von Diamanten mit Kobalt oder Nickel soll eine bessere Einbindung der Diamanten in das Matrixmetal ermöglicht werden. Ist die Bindung zwischen dem Matrixmetall und der Oberfläche der Diamanten ungenügend, dann brechen die Diamanten während des Schneidvorganges aus und gehen damit verloren. Erhöht man die Heißpreß- und Sintertemperatur zur besseren Einbindung der Diamanten, so bilden diese unter Angriff der Oberflächen mit dem Matrixmetall karbidische Zonen und bei weiterer Temperaturerhöhung werden die Diamanten zerstört Einen Einfluß auf die Hätte des Matrixmetalles haben die Ummantelungen der Diamanten jedoch nicht.

Nach diesem Verfahren hergestellte Diamantwerkzeuge haben zahlreiche Inhomogenitätsbereiche, weil die Hartphasen des Matrixmetalls lediglich an der Oberfläche der Diamantparikel und an den Stellen der Hartstoffpartikel selbst auftreten. Eine gezielte Steuerung der Härte-Vorgaben im fertigen Werkzeug läßt sich auf diese Weise nicht erreichen.

Abweichend von den natürlichen Härte- und Duktilitätseigenschaften, die sich zufällig aus den Begleitelementen und der Morphologie der Kobaltmetallpulver ergeben, werden von der Anwenderseite immer wieder solche Kobaltmetallpulver gefordert, die je nach Anwendungszweck definierbare Härtebedingungen in den Diamantwerkzeugen erfüllen sollen, d.h. die vorgegebene Brinellhärte soll im Bereich von 200 bis 500 HB₃₀ reproduzierbar einzustellen sein.

Es hat an Versuchen nicht gefehlt, durch Zugabe von anderen Metallen, Karbiden, Kohlenstoff, Boriden oder Siliziden das Kobalt zu härten. Das ist zwar ohne weiteres möglich, allerdings werden dann auch die tribologischen Eigenschaften des Matrixmetalles erheblich beeinflußt:

Die Auskolkung hinter den Diamanten wird je nach Partikelgröße der zugesetzten Hartstoffe unregelmäßig und oberflächlich rauh. Außerdem muß die Mischung des Matrixmetalles mit den Hartstoffen beim Optimieren für eine bestimmte Gesteinsart experimentell ermittelt werden. Diese Versuche sind aufwendig und teuer.

Die Zugabe von Kohlenstoff zum Kobaltmetallpulver vor dem Heißpressen führt zu einem unbefriedigenden Ergebnis, da die Reaktion C + CoO --> Co + CO durch den heißen Graphitsuszeptor und den Graphitstempel die ebenfalls an der Reaktion mitwirken, beeinflußt wird. Demzufolge schwankt auch die Härte des Matrixmetalles Kobalt.

Es ist somit Aufgabe dieser Erfindung, ein Diamantwerkzeug zur Verfügung zu stellen, welches die beschriebenen Nachteile nicht aufweist. Insbesondere soll ein vorgegebener Härtebereich gezielt erreichbar sein, der dem Anwendungszweck des Diamantwerkzeuges entspricht.

Diese Aufgabe wird erfüllt durch borhaltige kobaltgebundene Diamantwerkzeuge, bestehend aus borhaltigem Kobaltmetall als Matrixmetall und darin eingebetteten Diamanten, wobei das Matrixmetall ein Kobalt-Bor-Legierungspulver ist, welches 0,1 bis 5 Gew.-% Bor in gleichmäßiger Verteilung enthält und eine Brinellhärte im Bereich von 200 bis 650 HB₃₀ aufweist (siehe auch Tabellen 1 und 2). Die erfindungsgemäßen Diamantwerkzeuge weisen eine in Abhängigkeit vom Bor-Gehalt definierte und auch nach Einsatz der Werkzeuge dauerhalte Härte auf.

Die erfindungswesentliche homogene Härtung des Kobaltmetallmatrixpulvers ist bei Temperaturen, die weit unter dem Schmelzpunkt des Matrixmetalles liegen, möglich, wenn man mit Bor vorlegiertes Kobaltmetallpulver als Matrixmetall einsetzt und dieses als solches oder in Mischung mit undotiertem (reinem) Kobaltmetallpulver für die pulvermetallurgische Herstellung von Diamantwerkzeugen verwendet.

Gegenstand dieser Erfindung sind somit auch Verfahren zur Herstellung der erfindungsgemäßen Diamantwerkzeuge. In einer Ausführungsform werden die Diamantwerkzeuge durch Verpressen und Sintern von Gemischen aus Diamantpulver und Matrixmetallpulver erhalten, wobei als Matrixmetallpulver mit Bor vorlegiertes Kobaltpulver mit Borgehalten von 1 bis 5 Gew.-% eingesetzt wird, welches eine Brinellhärte im Bereich von 200 bis 650 HB₃₀ aufweist.

Eine weitere Ausführungsform des Verfahrens zur Herstellung der erfindungsgemäßen Diamantwerkzeuge durch Verpressen und Sintern von Gemischen aus Diamantpulver und Matrixmetallpuler ist dadurch gekennzeichnet, daß das Matrixmetallpulver mit einem Bor-Gehalt von 1 bis 5 Gew.-% durch Mischen von vorlegiertem Kobalt-Bor-Pulver mit reinem Kobaltmetallpulver hergestellt wird.

Entsprechende vorlegierte Kobalt-Bor-Pulver können z.B. durch mechanisches Zerkleinern einer metallothermisch hergestellten Kobalt-Bor-Legierung oder aber vorteilhaft auch durch Inertgasverdüsung einer borhaltigen Kobaltschmelze zu einem Pulver mit Korngrößen <500 »m erhalten werden, welches zur Verringerung der Korngrößen noch mittels Attritormahlung feingemahlen wird.

Mit Mischungen von reinem Kobaltpulver mit reinem amorphen oder kristallinem Bor wird das erfindungsgemäße Ziel nicht erreicht.

Eine weiterhin bevorzugte Ausführungsform des erfindungsgemäßen Verfahrens besteht darin, däß der Borgehalt des vorlegierten Kobalt-Bor-Pulvers durch chemische Reduktion von Kobaltsalzlösungen mittels Borwasserstoffverbindungen, vorzugsweise mit Alkaliboranaten in das Kobaltmetallpulver eingebracht wird. Hierbei werden bevorzugt Kobaltmetallpulver mit einer durchschnittlichen Korngröße von <5 »m erhalten.

Wenn man die durch chemische Reduktion und/oder die durch metallurgische Verfahren hergestellten KobaltBor-Legierungspulver mit reinem Kobaltmetallpulver mischt, um die gewünschten Borgehalte im Matrixmetall einzustellen, wird überraschenderweise derselbe Zweck erreicht wie bei den "in-situ" legierten Co-B-Pulvern, die ungemischt eingesetzt werden. Das reine Kobaltmetallpulver, das dem Zumischen dient, wird auf die übliche Weise aus feinverteilten Kobaltoxid durch Wasserstoffreduktion hergestellt.

Gegenstand dieser Erfindung ist auch die Verwendung der erfindungsgemäßen Diamantwerkzeuge zum Schneiden, Bohren und Schleifen von Gestein, Metall, Glas, Beton, Keramik und anderer mineralischer Werkstoffe.

In den folgenden Beispielen wird die Erfindung beispielhaft beschrieben, ohne däß hierin eine Einschränkung zu sehen ist Dabei wurden die Testproben für die Härtebestimmungen wie folgt hergestellt:

Die Mischungen aus dem Co-B-Legierungspulvern aus den Beispielen 1 bis 3 mit reinem Kobaltmetallpulver wurden zu Ausgangspulvern für Testproben verwendet. Diese wurden durch 5-minütiges Heißpressen der Metallpulver bei 960°C und 30 MPa hergestellt. An den Sinterkörpern wurde anschließend die Brinellhärte gemessen. Die nachstehende Tabelle 1 gibt die Ergebnisse der Härtemessungen an Sinterkörpern wieder, die aus Mischungen von bordotiertem Kobaltmetallpulver aus metallothermischer Herstellung mit reinem Kobaltpulver hergestellt worden sind. Der Meßwert an der Vergleichssubstanz (ungemischte Co-B-Legierung aus metallothermischer Reduktion) deutet auf eine Umkehr des Effektes hin, wenn man mit relativ hohen Borgehalten arbeitet, die außerhalb des erfindungsgemäßen Bereiches liegen.

**Tabelle 1**

| Borgehalt | Brinell-Härte (HB_{30/1}) |
|---|---|
| 1,0 Gew.-% | 280 |
| 2,0 Gew.-% | 300 |
| 3,0 Gew.-% | 420 |
| 4,0 Gew.-% | 500 |
| 5,0 Gew.-% | 650 |
| 14,4 Gew.-% (Vergleich) | 395 |

In der nachfolgenden Tabelle 2 sind Härtemessungen an Sinterkörpern aus bordotiertem Kobaltmetallpulver wiedergegeben, die durch chemische Reduktion mit Boranaten hergestellt worden sind. Die relativ geringeren Anfangshärten sind auf die hohe Reinheit des bordotierten Kobaltmetalls zurückzuführen, das man durch chemische Reduktion erhält.

**Tabelle 2**

| Borgehalt | Brinell-Härte (HB_{30/1}) |
|---|---|
| 1,0 Gew.-% | 190 |
| 2,0 Gew.-% | 240 |
| 3,0 Gew.-% | 440 |
| 4,0 Gew.-% | 500 |
| 5,0 Gew.-% | 550 |

In der Tabelle 2 sind Härtemessungen an Sinterkörpern aus bordotiertem Kobaltmetallpulver, hergestellt durch chemische Reduktion mit Boranaten (KBH₄-Reduktion) dargestellt.

Die geringen Anfangshärten sind auf die hohe Reinheit des Kobaltanteils zurückzuführen Cobalt Monograph., Centre D'information du Cobalt, Brüssel 1960, S. 95. Die erfindungsgemäße Wirkung der Bordotierung wird demgemäß auch bei sehr reinem Kobalt erhalten.

### Beispiel 1: Chemische Reduktion von Kobaltsalzen

In einem Rührwerksbehälter von 200 l wurden 14 kg CoCl₂.6H₂O, 17,5 kg K-Na-Tartrat und 8 kg NaOH unter Rühren in 70 l H₂O gelöst. Die Temperatur wurde dabei bei 40°C gehalten. Der erhaltenen Lösung wurden zur Reduktion langsam portionsweise insgesamt 2,1 kg KBH₄ zugegeben. Die Temperatur wurde dabei im Reaktionsbehälter konstant auf 50°C gehalten. Anschließend wurden zur vollständigen Reduktion 2 l 50-%ige Hydrazinhydratlösung zugegeben. Das auf diesem Wege erhaltene Co-B-Pulver wird abfiltriert und mehrmals mit Wasser gewaschen und anschließend unter vermindertem Druck bei 40 bis 50°C getrocknet. Es werden 3,6 kg Co-B-Pulver mit einem Borgehalt von 3,0 % erhalten. An den heißgepreßten Proben wurde eine durchschnittliche Brinellhärte von HB₃₀ 440 gemessen.

### Beispiel 2: Chemische Reduktion von Kobaltsalzen

Entsprechend Beispiel 1 wurden 30 kg CoCl₂.6H₂O, 37,5 kg K-Na-Tartrat und 17,1 kg NaOH in einem 400 l Rührwerkskessel in 250 l Wasser gelöst Zur Reduktion wurden nacheinander in kleinen Portionen zunächst 4,5 kg KBH₄ und dann 4,5 l Hydrazinlösung zugesetzt Nach der Reduktion wurde die Mischung auf 80°C aufgeheizt, anschließend filtriert und mehrfach mit Wasser gewaschen und wie in Beispiel 1 getrocknet.

Es wurden 7,65 kg Co-B-Pulver mit einem Borgehalt von 5,0 % erhalten. An den heißgepreßten Proben wurde eine durchschnittliche Brinellhärte von HB₃₀ 600 gemessen. Dieses Kobalt-Bor-Pulver wurde auch zum Vermischen mit reinem Kobaltmetallpulver verwendet.

### Beispiel 3: Bordotierung mittels Kobalt-Bor-Legierung

Durch aluminothermische Reduktion wurde aus Kobaltoxid, Boroxid und Aluminiumgries eine Kobalt-Bor-Legierung mit 15,5 Gew.-% Bor hergestellt und durch Zerkleinern eine Körnung von <3 mm zu Grobpulver verarbeitet. Eine Nachzerkleinerung in einem Attritor unter Inertflüssigkeit (Hexan) lieferte ein feines Legierungspulver mit einer Körnung von <20 »m mit der folgenden Kornverteilung:
80 Gew.-% <5 »m;
95 Gew.-% <10 »m;
5 Gew.-% >10 »m bis <20 »m;
Dieses Kobalt-Bor-Pulver wurde zum Vermischen mit reinem Kobaltmetallpulver verwendet.

## Patentansprüche (Patentansprüche für folgende(n) Vertragsstaat(en): AT, DE, FR)

1. Borhaltige kobaltgebundene Diamantwerkzeuge, bestehend aus Bor-haltigem Kobaltmetall als Matrixmetall und darin eingebetteten Diamanten, wobei das Matrixmetall ein Kobalt-Bor-Legierungspulver ist, welches 0,1 bis 5 Gew.-% Bor in gleichmäßiger Verteilung enthält und eine Brinellhärte im Bereich von 200 bis 650 HB₃₀ aufweist.

2. Verfahren zur Herstellung von Diamantwerkzeugen gemäß Anspruch 1 durch Verpressen und Sintern von Gemischen aus Diamantpulver und Matrixmetallpulver, dadurch gekennzeichnet, daß als Matrixmetallpulver mit Bor vorlegiertes Kobaltpulver mit Borgehalten von 1 bis 5 Gew.-% eingesetzt wird.

3. Verfahren zur Herstellung von Diamantwerkzeugen gemäß Anspruch 1 durch Verpressen und Sintern von Gemischen aus Diamantpulver und Matrixmetallpulver, dadurch gekennzeichnet, daß das Matrixmetallpulver mit einem Bor-Gehalt von 1 bis 5 Gew.-% durch Mischen von vorlegiertem Kobalt-Bor-Pulver mit einem Kobaltmetallpulver hergestellt wird.

4. Verfahren gemäß einem der Ansprüche 2 oder 3, dadurch gekennzeichnet, däß der Borgehalt des vorlegierten Kobalt-Bor-Pulvers durch chemische Reduktion von Kobaltsalzlösungen mittels Borwasserstoffverbindungen, vorzugsweise mit Alkaliboranaten in das Kobaltmetallpulver eingebracht wird.

5. Verfahren gemäß einem der Ansprüche 2 oder 3, dadurch gekennzeichnet, daß der Borgehalt des vorlegierten Kobalt-Bor-Pulvers durch metallothermische Reduktion eingebracht wird.

6. Verwendung der kobaltgebundenen Diamantwerkzeuge gemäß einem oder mehreren der Ansprüche 1 bis 5 zum Schneiden, Bohren und Schleifen von Gestein, Glas, Metall, Beton, Keramik und anderer mineralischer Werkstoffe.

## Patentansprüche (Patentansprüche für folgende(n) Vertragsstaat(en): ES, GR)

1. Verfahren zur Herstellung von borhaltigen, kobaltgebundenen Diamantwerkzeugen, bestehend aus borhaltigem Kobaltmetall als Matrixmetall und darin eingebetteten Diamanten, durch Verpressen und Sintern von Gemischen aus Diamantpulver und Matrixmetallpulver, dadurch gekennzeichnet, daß als Matrixmetallpulver mit Bor vorlegiertes Kobaltpulver mit Borgehalten von 1 bis 5 Gew.-% eingesetzt wird, welches eine Brinellhärte im Bereich von 200 bis 650 HB₃₀ aufweist.

2. Verfahren zur Herstellung von Diamantwerkzeugen gemäß Anspruch 1 durch Verpressen und Sintern von Gemischen aus Diamantpulver und Matrixmetallpulver, dadurch gekennzeichnet, däß das Matrixmetallpulver mit einem Bor-Gehalt von 1 bis 5 Gew.-% durch Mischen von vorlegiertem Kobalt-Bor-Pulver mit einem Kobaltmetallpulver hergestellt wird.

3. Verfahren gemäß Anspruch 2, dadurch gekennzeichnet, däß der Borgehalt des vorlegierten Kobalt-Bor-Pulvers durch chemische Reduktion von Kobaltsalzlösungen mittels Borwasserstoffverbindungen, vorzugsweise mit Alkaliboranaten in das Kobaltmetallpulver eingebracht wird.

4. Verfahren gemäß Anspruch 2, dadurch gekennzeichnet, daß der Borgehalt des vorlegierten Kobalt-Bor-Pulvers durch metallothermische Reduktion eingebracht wird.

## Claims (Claims for the following Contracting State(s): AT, DE, FR)

1. Boron-containing cobalt bonded diamond tools, consisting of boron-containing cobalt metal as matrix metal and diamonds embedded therein, wherein the matrix metal is a cobalt-boron alloyed powder which contains from 0.1 to 5% by weight of boron evenly distributed and has a Brinell hardness in the range of from 200 to 650 HB₃₀.

2. Process for the production of diamond tools according to claim 1 by pressing and sintering mixtures of diamond powder and matrix metal powder, characterised in that the matrix metal powder used is cobalt powder prealloyed with boron and having a boron content of from 1 to 5% by weight.

3. Process for the production of diamond tools according to claim 1 by pressing and sintering mixtures of diamond powder and matrix metal powder, characterised in that the matrix metal powder having a boron content of from 1 to 5% by weight is produced by mixing prealloyed cobalt-boron powder with a cobalt metal powder.

4. Process according to one of claims 2 or 3, characterised in that the boron content of the prealloyed cobalt-boron powder is introduced into the cobalt metal powder by the chemical reduction of solutions of cobalt salts by means of boron hydride compounds, preferably alkali metal borohydrides.

5. Process according to one of claims 2 or 3, characterised in that the boron content of the prealloyed cobalt-boron powder is introduced by metallothermal reduction.

6. Use of the cobalt bonded diamond tools according to one or more of claims 1 to 5 for the cutting, drilling and grinding of stone, glass, metal, concrete, ceramics and other mineral materials.

## Claims (Claims for the following Contracting State(s): ES, GR)

1. Process for the production of boron-containing cobalt bonded diamond tools, consisting of boron-containing cobalt metal as matrix metal and diamonds embedded therein, by pressing and sintering mixtures of diamond powder and matrix metal powder, characterized in that the matrix metal powder used is cobalt powder prealloyed with boron which has a boron content of from 1 to 5% by weight and a Brinell hardness in the range of from 200 to 650 HB₃₀.

2. Process for the production of diamond tools according to claim 1 by pressing and sintering mixtures of diamond powder and matrix metal powder, characterised in that the matrix metal powder having a boron content of from 1 to 5% by weight is produced by mixing prealloyed cobalt-boron powder with a cobalt metal powder.

3. Process according to claim 2, characterised in that the boron content of the prealloyed cobalt-boron powder is introduced into the cobalt metal powder by the chemical reduction of solutions of cobalt salts by means of boron hydride compounds, preferably alkali metal borohydrides.

4. Process according to claim 2, characterised in that the boron content of the prealloyed cobalt-boron powder is introduced by metallothermal reduction.

## Revendications (Revendications pour l'(les) Etat(s) contractant(s) suivant(s): AT, DE, FR)

1. Outils diamantés liés par du cobalt contenant du bore, constitués de métal de cobalt contenant du bore comme métal de matrice et de diamants qui y sont incorporés, le métal de matrice est une poudre d'alliage cobalt-bore, qui contient en répartition régulière 0,1 à 5 % en poids de bore et présente une dureté Brinell dans l'intervalle de 200 à 650 HB₃₀.

2. Procédé de production d'outils diamantés selon la revendication 1 par compression et frittage de mélanges de poudre de diamant et de poudre de métal de matrice, caractérisé en ce qu'on utilise comme poudre de métal de matrice de la poudre de cobalt préalliée à du bore avec des teneurs en bore comprises entre 1 et 5 % en poids.

3. Procédé de production d'outils diamantés selon la revendication 1 par compression et frittage de mélanges de poudre de diamants et de poudre de métal de matrice, caractérisé en ce qu'on prépare la poudre de métal de matrice avec une teneur en bore pouvant atteindre 1 à 5 % en poids par mélange de poudre cobalt-bore préalliée à une poudre de métal de cobalt.

4. Procédé selon l'une des revendications 2 ou 3, caractérisé en ce qu'on incorpore la teneur en bore de la poudre cobalt-bore préalliée par réduction chimique de solutions de sels de cobalt au moyen de composés d'hydrure de bore, de préférence à l'aide de boranates d'alcalin dans la poudre de métal de cobalt.

5. Procédé selon l'une des revendications 2 ou 3, caractérisé en ce qu'on incorpore la teneur en bore de la poudre de cobalt-bore préalliée par réduction métallothermique.

6. Outils diamantés liés par du cobalt contenant du bore selon une ou plusieurs des revendications 1 à 5 pour couper, forer et poncer des roches, du métal, du verre, du béton, de la céramique et d'autres matériaux minéraux.

## Revendications (Revendications pour l'(les) Etat(s) contractant(s) suivant(s): ES, GR)

1. Procédé de production d'outils diamantés liés au cobalt contenant du bore, constitués de métal de cobalt comme métal de matrice et de diamants qui y sont incorporés, par compression et frittage de mélanges de poudre de diamant et de poudre de métal de matrice, caractérisé en ce qu'on utilise comme poudre de métal de matrice de la poudre de cobalt préalliée au bore avec des teneurs en bore de 1 à 5 % en poids, qui présentent une dureté Brinell dans l'intervalle de 200 à 650 HB₃₀.

2. Procédé de production d'outils diamantés selon la revendication 1 par compression et frittage de mélanges de poudre de diamant et de poudre de métal de matrice, caractérisé en ce qu'on prépare la poudre de métal de matrice à une teneur en bore de 1 à 5 % en poids par mélange de poudre de cobalt-bore préalliée avec une poudre de métal de cobalt.

3. Procédé selon la revendication 2, caractérisé en ce qu'on incorpore la teneur en bore de la poudre de cobalt-bore préalliée par réduction chimique de solution de sels de cobalt au moyen de composés d'hydrure de bore, de préférence à l'aide de boranates d'alcalin dans la poudre de métal de cobalt.

4. Procédé selon la revendication 2, caractérisé en ce qu'on incorpore la teneur en bore de la poudre de cobalt-bore préalliée par réduction métallothermique.
